# EUROPEAN PATENT SPECIFICATION

(11) **EP 3 816 054 B1**
(45) Date of publication and mention of the grant of the patent: **08.01.2025**
(21) Application number: 19827193.4
(22) Date of filing: 26.06.2019
(51) Int. Cl.: B65B 57/14, B65B 39/12, B65B 3/12, B65B 3/14, B65B 3/22, B65B 3/36, B65B 39/00, B01D 19/00, B67C 3/26

(54) **FILLING CONDITION GENERATION DEVICE, FILLING DEVICE INCLUDING SAME, AND FILLING CONDITION GENERATION METHOD**
VORRICHTUNG ZUR ERZEUGUNG EINES FÜLLZUSTANDES, FÜLLVORRICHTUNG DAMIT UND VERFAHREN ZUR ERZEUGUNG EINES FÜLLZUSTANDES
DISPOSITIF DE GÉNÉRATION DE CONDITIONS DE REMPLISSAGE, DISPOSITIF DE REMPLISSAGE COMPRENANT CE DERNIER, ET PROCÉDÉ DE GÉNÉRATION DE CONDITIONS DE REMPLISSAGE

(30) Priority: 26.06.2018 JP 2018121407
(43) Date of publication of application: 05.05.2021
(73) Proprietor: Wist Co., Ltd., Kyoto 619-0237 (JP)
(72) Inventor: WADA, Katsuhiko, Soraku-gun, Kyoto 619-0237 (JP)
(74) Representative: Algemeen Octrooi- en Merkenbureau B.V.
(86) International application number: PCT/JP2019/025315
(87) International publication number: WO 2020/004445

(56) References cited:
- JP-A- 2008 201 425
- JP-A- H06 191 501
- JP-A- H06 191 501
- JP-B1- S4 834 138
- JP-U- S5 096 143
- US-A- 6 100 094
- US-A1- 2016 023 786

## Description

### TECHNICAL FIELD

The present invention relates to a filling device containing a filling condition generation device according to claim 1, and filling condition generation method according to claim 3.

### BACKGROUND ART

Conventionally, various filling devices have been known that fill containers with filling liquid, in a state where a tip end portion of a nozzle of the filling device is close to a liquid surface of the filling liquid, to suppress foaming of the filling liquid. There are various shapes of the container to be filled, and the way the liquid surface rises when filling the filling liquid differs among the shapes of the container.

This kind of filling device includes a filling device configured to fill a container filled filling liquid, in a state where a tip end portion of a nozzle of the filling device is close to the liquid surface of the filling device based on a distance to the liquid surface of the filling device from the tip end portion of the nozzle of the filling device detected by a distance sensor (see Patent Document 1). The filling device can fill various containers having different shapes with the filling liquid, in the state where the tip end portion of the nozzle of the filling device is close to the liquid surface of the filling liquid.

The filling device includes a filling device that is configured to fill a container with filling liquid, in a state where the tip end portion of the nozzle of the filling device is close to the liquid surface of the filling liquid, based on a condition (hereinafter, referred to as "filling condition") for the filling device to fill the container with the filling liquid. Such a filling device ejects the filling liquid from the nozzle of the filling device without detecting the distance from the tip end portion of the nozzle of the filling device to the liquid surface of the filling liquid, whereby the ejection amount of the filling liquid from the nozzle of the filling device per unit time can be made large. The filling condition is set in the filling device by the operator.

### CITATIONS LIST

### PATENT LITERATURE

Patent Literature 1: JP-A H6-191501 Gazette

### SUMMARY OF INVENTION

### TECHNICAL PROBLEMS

Unfortunately, the optimum filling condition might not be set in the filling device. Such a case results in overflowing of the filling liquid from the container, foaming of the filling liquid because the nozzle of the filling device and the liquid surface of the filling liquid are not close to each other, or a small ejection amount of the filling liquid from the nozzle of the filling device per unit time. An operation of moving the nozzle of the filling device, an operation of starting or stopping the ejection of the filling liquid according to a moved position of the nozzle of the filling device, and an operation of ejecting the filling liquid in an ejection amount corresponding to the moved position of the nozzle of the filling device are required for setting the optimum filling condition. An operator needs to be skilled to manually manipulate such operations of the filling device, and thus the optimum filling condition is difficult to set. In particular, when an opaque container the interior of which is invisible is to be filled with filling liquid, the nozzle and the filling liquid inside the container can only be seen through an opening of the container. Thus, the moved position of the nozzle and the ejection amount of the filling liquid from the nozzle (the position of the liquid surface of the filling liquid) are difficult to check, meaning that the filling condition is even more difficult to set.

Therefore, there has been a problem in that the optimum filling condition for the filling device cannot be easily set.

The present invention is made in view of the above, and an object of the present invention is to provide a filling condition generation device, a filling device including the same, and a filling condition generation method with which an optimum filling condition to be set in a filling device can be easily generated.

### SOLUTIONS TO PROBLEMS

The problem to be solved by the present invention is as described above. Next, means for solving the problem will be described.

A filing device comprising a filling condition generation device according to the claims is provided.

The present disclosure also provides a filling condition generation method by a filling condition generation device as set out in the claims.

### ADVANTAGEOUS EFFECTS OF INVENTION

The effect of the present invention is as follows.

Specifically, with the present invention, the optimum filling conditions set in the filling device can be easily generated.

### BRIEF DESCRIPTION OF DRAWINGS

FIG. 1 is a perspective view illustrating an overall configuration of a filling condition generation device according to an embodiment of the present invention.
FIG. 2(A) is a cross-sectional view of the vicinity of a tip end portion of a nozzle in a state where the nozzle of the filling condition generation device is not immersed in filling liquid, and FIG. 2(B) is a cross-sectional view illustrating the vicinity of the tip end portion of the nozzle when the nozzle of the filling condition generation device is immersed in the filling liquid.
FIG. 3(A) is a cross-sectional view illustrating the vicinity of the tip end portion of the nozzle in a state where tip end portions of the inner and outer tubes are at the same height in the filling condition generation device, and FIG. 3(B) is a cross-sectional view illustrating the vicinity of a nozzle provided with an electrode type sensor in the filling condition generation device.
FIG. 4(A) is a schematic cross-sectional view of the filling condition generation device in a state where an opening degree of a filling valve is 100%, FIG. 4(B) is a schematic cross-sectional view of the filling condition generation device in a state where the opening degree of the filling valve is 50%, and FIG. 4(C) is a schematic cross-sectional view of the filling condition generation device in a state where the opening degree of the filling valve is 0%.
FIG. 5(A) is a side view illustrating a shape of a container that is cylindrical and has a shoulder portion with a square corner shape, FIG. 5(B) is a side view illustrating a shape of a container that is a thin and flat square tube shape, FIG. 5(C) is a side view illustrating a shape of a container having a triangular pyramid shape, and FIG. 5(D) is a side view illustrating a shape of a container having a shape with a diameter varying along the height.
FIG. 6 is a diagram illustrating a control configuration of the filling condition generation device.
FIG. 7 is a flowchart illustrating control for generating the filling condition by the filling condition generation device.
FIG. 8 is a diagram illustrating movement of nozzle and ejection of filling liquid from the nozzle in the filling condition generation device.
FIG. 9 is a flowchart illustrating a process for generating a filling condition by the filling condition generation device.
FIG. 10 is a flowchart illustrating control in which a stop condition is satisfied when both of a position condition and an ejection condition are satisfied.
FIG. 11(A) is a flowchart illustrating control in which the stop condition is satisfied when either the position condition or the ejection condition is satisfied, FIG. 11(B) is a flowchart illustrating control in which the stop condition is satisfied when the position condition is satisfied, FIG. 11(C) is a flowchart illustrating control in which the stop condition is satisfied when the ejection condition is satisfied.
FIG. 12 is a perspective view of an air cylinder of the filling condition generation device.
FIG. 13 is a diagram illustrating a control configuration of the filling condition generation device.
FIG. 14 is a flowchart illustrating control for generating the filling condition by the filling condition generation device.

### DESCRIPTION OF EMBODIMENTS

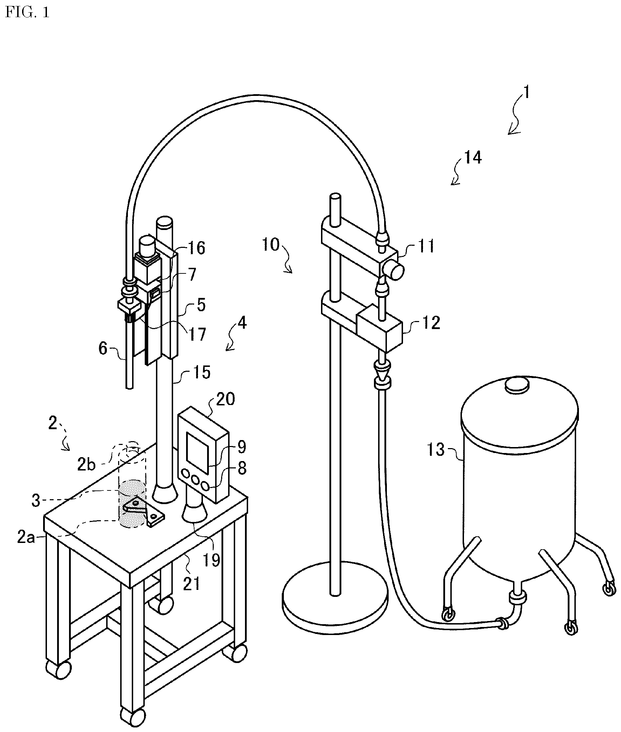

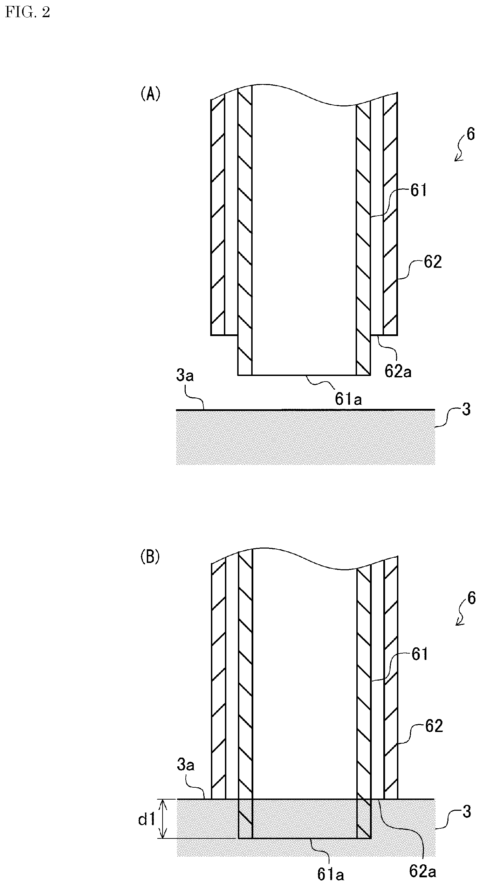

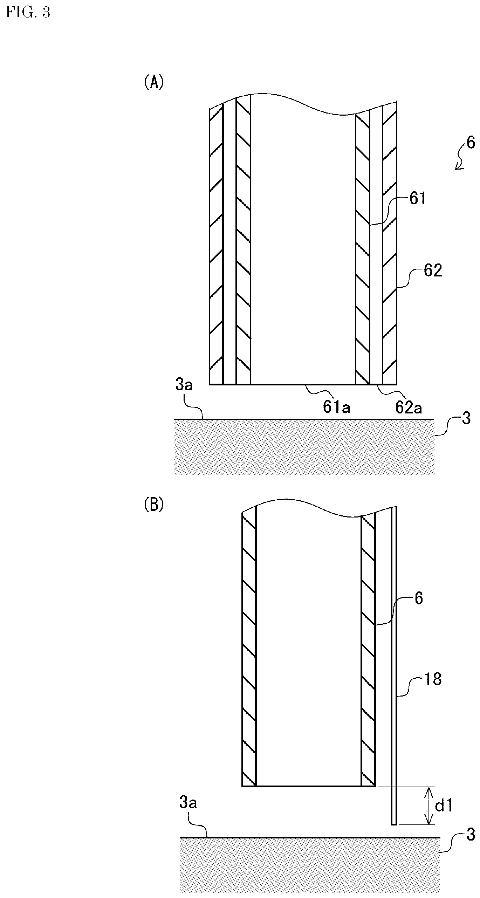

Next, a filling condition generation device 1 according to a first embodiment of the present invention will be described with reference to FIG. 1. The description is supplemented with reference to FIGS. 2 and 3.

The filling condition generation device 1 is a device that generates a filling condition when a filling device (not illustrated) fills a container with filling liquid 3 according to the shape of the container. The filling device is a device that consecutively fills a plurality of containers with the filling liquid 3. The container is equipment to be filled with the filling liquid 3 by the filling device. The container will be described as a cylindrical container 2 in the present embodiment. The filling liquid 3 includes: "cosmetics" such as lotion, milky lotion, and hair styling product; "food stuffs" such as seasonings including ketchup, mayonnaise, barbecue sauce, and dressing, soft drinks, and alcoholic beverages; and liquid "medicines". The filling liquid 3 includes a liquid that is likely to foam, such as a lotion.

The filling condition generation device 1 includes a first housing 4, a driving device 5, a nozzle 6, a liquid surface sensor 7, an operating tool 8, a display device 9, a second housing 10, and a filling valve 11, a flow sensor 12, and a tank 13. The filling condition generation device 1 is formed by providing the driving device 5, the nozzle 6, the liquid surface sensor 7, the operating tool 8, and the display device 9 in the first housing 4. The filling condition generation device 1 is formed by providing the filling valve 11 and the flow sensor 12 in the second housing 10. The filling condition generation device 1 is configured such that the filling liquid 3 flows (is supplied) from the tank 13 to the nozzle 6 through a pipe 14.

The filling condition generation device 1 is configured such that the nozzle 6 moves from the side of a bottom surface 2a of the container 2 to the side of an opening 2b of the container 2 while the filling liquid 3 is being ejected from the nozzle 6. The filling condition generation device 1 generates a filling condition based on the amount of the filling liquid 3 ejected from the nozzle 6 corresponding to the position of a tip end portion of the nozzle 6 when the nozzle 6 moves. The filling condition generation device 1 and the filling device are electrically connected to each other, and the filling condition is automatically or manually transmitted from the filling condition generation device 1 to the filling device to be set in the filling device. The filling condition generation device 1 may be configured to transmit the filling condition to the filling device wirelessly or by means of a memory.

The driving device 5 of the filling condition generation device 1 is a device for moving the nozzle 6. The driving device 5 moves up and down along a pole 15 of the first housing 4. The nozzle 6 is attached to the driving device 5 via a nozzle housing 16. Therefore, when the driving device 5 moves up and down, the nozzle 6 moves up and down by the same distance.

The nozzle 6 of the filling condition generation device 1 is a device that ejects the filling liquid 3 into the container 2. The nozzle 6 is an embodiment of a generation device side nozzle. The nozzle 6 is a straight nozzle and includes an inner tube 61 and an outer tube 62 (see FIG. 2(A)). With the inner tube 61 and the outer tube 62, the nozzle 6 is configured to have a double tube structure.

The inner tube 61 of the nozzle 6 of the filling condition generation device 1 is located on the inner side of the outer tube 62. The inner tube 61 has a tip end portion located more on the downstream side than a tip end portion of the outer tube 62 in a flow direction of the filling liquid 3. The inner tube 61 is arranged to have a base end portion connected to the pipe 14, and have the tip end side facing downward.

The inner tube 61 is configured such that the filling liquid 3 flows through the inner tube 61 from the base end side to the tip end side of the inner tube 61. The nozzle 6 ejects the filling liquid 3 through an opening 61a of the inner tube 61.

The outer tube 62 of the nozzle 6 of the filling condition generation device 1 is arranged so as to be located on the outer side of the inner tube 61. In the outer tube 62, an air space is formed between an outer surface of the inner tube 61 and an inner surface of the outer tube 62. The outer tube 62 has a tip end portion located more on the upstream side than a tip end portion of the inner tube 61 in a flow direction of the filling liquid 3. The outer tube 62 is arranged to have a base end portion connected to an air hose 17, and have the tip end side facing downward.

The liquid surface sensor 7 of the filling condition generation device 1 is a sensor that is in charge of detection of a distance, from the tip end portion of the nozzle 6 to the liquid surface 3a of the filling liquid 3, being equal to or shorter than a first predetermined distance d1 (for example, 5 mm) (see FIG. 2(B)). The tip end portion of the nozzle 6 corresponds to the tip end portion of the inner tube 61 in the present embodiment. The liquid surface sensor 7 is connected to the air hose 17, and detects the air pressure in the outer tube 62 via the air hose 17. The liquid surface sensor 7 detects the air pressure in the outer tube 62 exceeding a predetermined pressure when the opening 62a of the outer tube 62 is immersed in the filling liquid 3. The liquid surface sensor 7 detects the distance from the tip end portion of the nozzle 6 to the liquid surface 3a of the filling liquid 3 being equal to or shorter than the first predetermined distance d1, upon detecting the air pressure in the outer tube 62 exceeding the predetermined pressure.

The nozzle 6 of the filling condition generation device 1 is configured to have the tip end portion of the inner tube 61 being at the same height as the tip end portion of the outer tube 62, so that formation of a skin on the filling liquid 3 at the opening 62a of the outer tube 62 can be suppressed (see FIG. 3(A)). Considering the risk that the skin may affect the air pressure inside the outer tube 62, the nozzle 6 having the tip end portion of the inner tube 61 being at the same height as the tip end portion of the outer tube 62 is configured to enable the liquid surface sensor 7 to more accurately detect the distance from the tip end portion of the nozzle 6 to the liquid surface 3a of the filling liquid 3 being equal to or shorter than the first predetermined distance d1.

The distance from the tip end portion of the nozzle 6 to the liquid surface 3a of the filling liquid 3 being equal to or shorter than the first predetermined distance d1 may be detected using an electrode type sensor 18 attached to the nozzle 6 of the filling condition generation device 1 (see FIG. 3(B)). The electrode type sensor 18 detects the immersion of the tip end portion of the electrode type sensor 18 in the filling liquid 3. The electrode type sensor 18 detects the immersion of the tip end portion of the electrode type sensor 18 in the filling liquid 3, to detect the distance from the tip end portion of the nozzle 6 to the liquid surface 3a of the filling liquid 3 being equal to or shorter than the first predetermined distance d1.

When the electrode type sensor 18 is used, the distance from the tip end portion of the nozzle 6 to the liquid surface 3a of the filling liquid 3 being equal to or shorter than the first predetermined distance d1 can be detected without immersing the tip end portion of the nozzle 6 in the filling liquid 3. Therefore, with the filling condition generation device 1, the filling liquid 3 can be prevented from adhering to the tip end portion of the nozzle 6. Furthermore, with the filling condition generation device 1, the distance from the tip end portion of the nozzle 6 to the liquid surface 3a of the filling liquid 3 being equal to or shorter than the first predetermined distance d1 can be detected more accurately by the electrode type sensor 18 because the electrode type sensor 18 involves no skin formation.

When the electrode type sensor 18 is used, the filling condition generation device 1 can have, as the nozzle 6, an outward opening shut nozzle configuration or an inward opening shut nozzle configuration, with which the ejection of the filling liquid 3 from the nozzle 6 can be stopped.

The operating tool 8 of the filling condition generation device 1 is a device for operating the filling condition generation device 1. The operating tool 8 includes a switch. The operating tool 8 is operated by an operator, for performing an operation such as staring generation of a filling condition and inputting set values. The operating tool 8 is attached to an operating housing 20 supported by the pole 19 of the first housing 4.

The display device 9 of the filling condition generation device 1 is a device that displays a setting screen, an operation status, and the like of the filling condition generation device 1. The display device 9 is attached to the operating housing 20 supported by the pole 19 of the first housing 4.

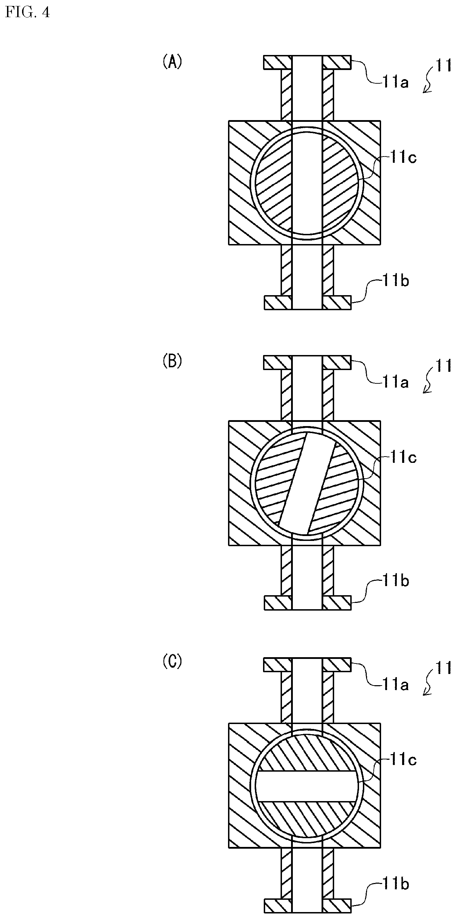

The filling valve 11 of the filling condition generation device 1 is a valve that adjusts an ejection amount of the filling liquid 3 from the nozzle 6 per unit time. The filling valve 11 has an opening degree adjustment valve 11c provided between one opening 11a and the other opening 11b of the filling valve 11. The filling valve 11 can change the ejection amount of the filling liquid 3 from the nozzle 6 per unit time, with the opening degree of the filling valve 11 changed by rotating the opening degree adjustment valve 11c using a servomotor (not illustrated). For example, when the opening degree of the filling valve 11 is changed from 100% (see FIG. 4(A)) to 50% (see FIG. 4(B)), the ejection amount of the filling liquid 3 from the nozzle 6 per unit time is changed from 100% to 50%. Further, when the opening degree of the filling valve 11 is set to 0% (see FIG. 4(C)), the ejection of the filling liquid 3 from the nozzle 6 is stopped.

The flow sensor 12 of the filling condition generation device 1 is a sensor that detects the ejection amount of the filling liquid 3 from the nozzle 6. A pulse signal corresponding to the ejection amount of the filling liquid 3 from the nozzle 6 is detected, and the ejection amount of the filling liquid 3 from the nozzle 6 is detected based on the pulse signal. The flow sensor 12 is arranged on a flow path of the filling liquid 3. The filling condition generation device 1 may eject a preset ejection amount of the filling liquid 3 from the nozzle 6 per unit time without using the flow sensor 12, and calculate the ejection amount of the filling liquid 3 based on a time at which the filling liquid 3 has been ejected from the nozzle 6.

The tank 13 of the filling condition generation device 1 is equipment for storing the filling liquid 3. The tank 13 of the filling condition generation device 1 is configured so that the air pressure inside the tank 13 can be set by a pressure control valve (not illustrated). The tank 13 is configured so that the supply amount of the filling liquid 3 to the nozzle 6 per unit time changes based on the air pressure in the tank 13. Thus, the ejection amount of the filling liquid 3 in the nozzle 6 per unit time is changed by the air pressure in the tank 13. The tank 13 is connected to the nozzle 6 via the pipe 14.

An example of a configuration in which the filling condition generation device 1 and the filling device fill the container 2 with the filling liquid 3 includes a piston type, a rotor type, a gear type, and the like.

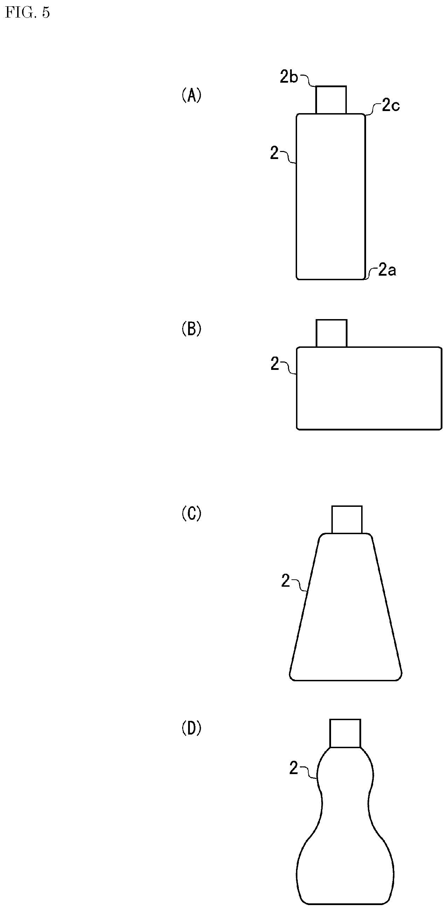

Next, the container 2 filled with the filling liquid 3 by the filling condition generation device 1 and the filling conditions will be described with reference to FIG. 5.

In the present embodiment, the container 2 in the filling condition generation device 1 is a container 2 having a cylindrical shape and a shoulder portion 2c with a square corner shape (see FIG. 5(A)). The container 2 is not limited to the container 2 having a cylindrical shape and the shoulder portion 2c with a square corner shape. Other possible examples include a container 2 which is thin and flat square tube shape (see FIG. 5(B)), a container 2 having a triangular pyramid shape (see FIG. 5(C)), a container 2 having a shape having a diameter varying along the height (see FIG. 5(D)), and the like. The container 2 is filled with the filling liquid 3 while being placed on a table 21 of the first housing 4 (see FIG. 1).

The filling condition in the filling condition generation device 1 is a condition of an operation of the filling device for consecutively filling a plurality of containers 2 with the filling liquid 3. The operation for filling the filling liquid 3 includes an operation of moving a nozzle (not illustrated) of the filling device and an operation of ejecting the filling liquid 3 from the nozzle of the filling device that are performed by the filling device when filling the filling liquid 3. The operation of ejecting the filling liquid 3 from the nozzle of the filling device includes: an operation of starting or stopping the ejection of the filling liquid 3 in accordance with a moved position of the nozzle of the filling device; and an operation of ejecting the filling liquid 3 in the ejection amount corresponding to the moved position of the nozzle of the filling device. The filling device controls the nozzle of the filling device to fill the container 2 with the filling liquid 3 based on the filling condition. The nozzle of the filling device is an embodiment of a filling device side nozzle.

An optimum filling condition in the filling condition generation device 1 includes a condition for filling the container 2 with the filling liquid 3 in a state where the tip end portion of the nozzle of the filling device is close to the liquid surface 3a of the filling liquid 3, so that the filling device can fill the container 2 with the filling liquid 3 while suppressing foaming of the filling liquid 3. The optimum filling condition further includes a condition that the ejection amount of the filling liquid 3 per unit time is at least greater than that of the filling condition generation device 1, and a condition that the filling liquid 3 is filled with the filling liquid 3 from the nozzle in an ejection amount per unit time enabling the filling performance of the filling device to be sufficiently exerted. The filling condition is set in advance, that is, before the filling device fills the container 2 with the filling liquid 3. There are various shapes of the container 2 to be filled, and the way the liquid surface 3a rises when filling the filling liquid 3 differs among the shapes of the container 2. Thus, the optimum filling condition varies among the shapes of the container 2. Once the filling condition is generated, the filling device can fill the containers 2 with the filling liquid 3 using the filling condition generated if the container 2 has the same shape as the container 2 for which the filling condition were generated.

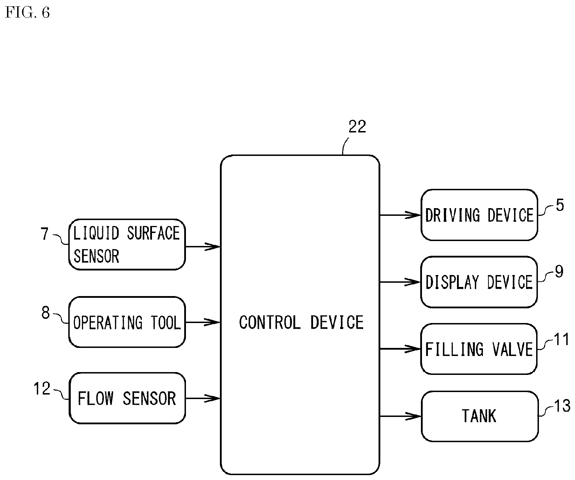

Next, a control configuration of the filling condition generation device 1 will be described with reference to FIG. 6.

As illustrated in FIG. 6, a control device 22 of the filling condition generation device 1 is electrically connected to the liquid surface sensor 7, the operating tool 8, the flow sensor 12, the driving device 5, the display device 9, the filling valve 11, and the tank 13.

The control device 22 of the filling condition generation device 1 acquires signals from the liquid surface sensor 7, the operating tool 8, and the flow sensor 12. Thus, the control device 22 can acquire information indicating that the distance from the tip end portion end portion of the nozzle 6 to the liquid surface 3a of the filling liquid 3 is equal to or shorter than the first predetermined distance d1. The control device 22 can further acquire information on the operation performed on the operating tool 8. The control device 22 can further acquire information on the ejection amount of the filling liquid 3 from the nozzle 6. The control device 22 includes a storage device (not illustrated), and can store a value set in the control device 22 and the ejection amount of the filling liquid 3 from the nozzle 6 detected by the flow sensor 12. Further, the control device 22 has a clock function and detects and stores the time when the filling liquid 3 has been ejected from the nozzle 6.

The control device 22 of the filling condition generation device 1 controls various operations of the filling condition generation device 1 (the driving device 5, the display device 9, the filling valve 11, and the tank 13). Specifically, the control device 22 can move the tip end portion of the nozzle 6 to a predetermined position by moving the driving device 5. The control device 22 can calculate the position of the tip end portion of the nozzle 6 based on the movement amount of the driving device 5. The control device 22 can store the position of the tip end portion of the nozzle 6 in the storage device. The control device 22 can display the setting screen, the operating status, and the like on the display device 9. The control device 22 can adjust the opening degree of the filling valve 11 to control the start and stop of the ejection of the filling liquid 3 from the nozzle 6 and the ejection amount per unit time. The control device 22 can set the air pressure in the tank 13 to change the ejection amount of the filling liquid 3 from the nozzle 6 per unit time.

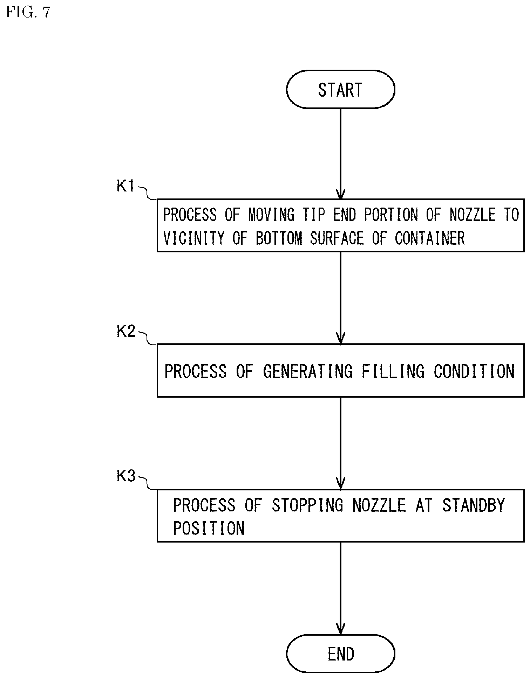

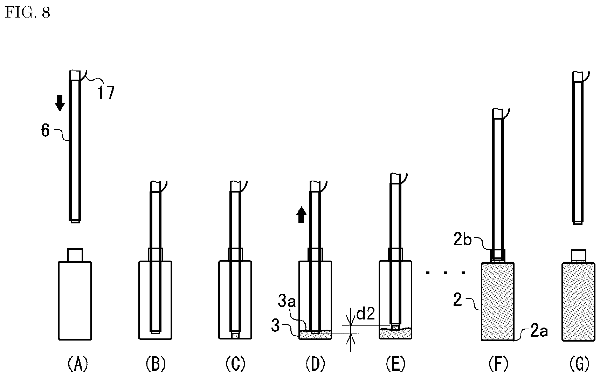

Next, control for generating the filling condition by the filling condition generation device 1 will be described with reference to FIG. 7. The description is supplemented with reference to FIG. 8.

As illustrated in FIG. 7, a filling condition generation method includes process K1 for moving the tip end portion of the nozzle 6 to the vicinity of the bottom surface 2a of the container 2, process K2 for generating the filling condition, and process K3 for stopping the nozzle 6 at a standby position. The position of the tip end portion of the nozzle 6 (hereinafter referred to as "start position") when the nozzle 6 starts ejecting the filling liquid 3 is set in advance in the control device 22 by the operator. The position of the tip end portion of the nozzle 6 (hereinafter referred to as "stop condition position") corresponding to the condition for stopping the ejecting of the filling liquid 3 from the nozzle 6 is set in advance in the control device 22 by the operator. The total ejection amount of the filling liquid 3 ejected from the nozzle 6 (hereinafter, simply referred to as "total amount") is set in advance in the control device 22 by the operator. The standby position of the nozzle 6 is set in advance in the control device 22.

In the filling condition generation device 1, the tip end portion of the nozzle 6 is first moved to the vicinity of the bottom surface 2a of the container 2 (process K1).

In this process, the nozzle 6 in the initial state is stopped at the standby position of the nozzle 6 (see FIG. 8(A)). Then, the control device 22 moves the tip end portion of the nozzle 6 to the start position, when the operator places the container 2 on the table 21 and turns ON the switch for starting the generation of the filling condition of the operating tool 8 (see FIG. 8(B)). The starting position on the side of the bottom surface 2a of the container 2 is set, for example, to be separated from the bottom surface 2a of the container 2 by 10 mm toward the opening 2b of the container 2.

When the tip end portion of the nozzle 6 moves to the vicinity of the bottom surface 2a of the container 2, the process proceeds to process K2.

The filling condition generation device 1 generates a filling condition (process K2).

In this process, the control device 22 moves the tip end portion of the nozzle 6 from the vicinity of the bottom surface 2a of the container 2 to the vicinity of the opening 2b of the container 2 so that the filling liquid 3 is ejected from the nozzle 6. The control device 22 moves the tip end portion of the nozzle 6 from a vicinity of the bottom surface 2a of the container 2 to the vicinity of the opening 2b of the container 2, by repeatedly moving the nozzle 6 toward the opening 2b of the container 2 by a second predetermined distance d2 (5 mm for example) and stopping the movement. The control device 22 detects the ejection amount of the filling liquid 3 from the nozzle 6 corresponding to the position of the tip end portion of the nozzle 6. The control device 22 generates the filling condition based on the ejection amount of the filling liquid 3 from the nozzle 6 corresponding to the position of the tip end portion of the nozzle 6. The second predetermined distance d2 can be set as appropriate by the operator.

When the filling condition is generated, the process proceeds to process K3.

Next, in the filling condition generation device 1, the nozzle 6 is stopped at the standby position (process K3).

In this process, the control device 22 stops the nozzle 6 moving toward the opening 2b of the container 2 at the standby position (the standby position side of the nozzle 6) (see FIG. 8(G)).

When the nozzle 6 is stopped at the standby position, the control for generating the filling condition is terminated.

As described above, the control device 22 automatically implements the movement of the nozzle 6 and ejecting of the filling liquid 3 from the nozzle 6, and detects the ejection amount of the filling liquid 3 of the nozzle 6 corresponding to the position of the tip end portion of the nozzle 6. Then, the control device 22 generates the filling condition based on the detected ejection amount of the filling liquid 3 from the nozzle 6 corresponding to the position of the tip end portion of the nozzle 6.

Thus, with the filling condition generation device 1, the optimum filling conditions to be set in the filling device can be easily generated.

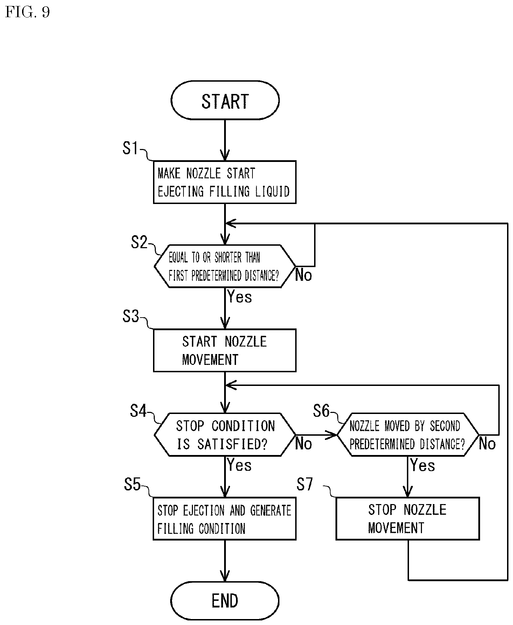

Next, process K2 for generating the filling condition by the filling condition generation device 1 will be described in detail with reference to FIG. 9. The description is supplemented with reference to FIG. 8.

As illustrated in FIG. 9, process K2 for generating the filling condition includes steps S1 to S7.

First of all, the filling condition generation device 1 causes the nozzle 6 to start ejecting the filling liquid 3 (step S1).

Specifically, the control device 22 causes the ejecting of the filling liquid 3 from the nozzle 6 into the container 2 to be started with the nozzle 6 not moving (see FIG. 8(C)).

When the nozzle 6 starts ejecting the filling liquid 3, the process proceeds to step S2.

Next, in the filling condition generation device 1, the control device 22 determines whether the distance from the tip end portion of the nozzle 6 to the liquid surface 3a of the filling liquid 3 is equal to or shorter than the first predetermined distance d1 (step S2).

When the control device 22 determines that the distance from the tip end portion of the nozzle 6 to the liquid surface 3a of the filling liquid 3 is equal to or shorter than the first predetermined distance d1, the process proceeds to step S3.

When the control device 22 determines that the distance from the tip end portion of the nozzle 6 to the liquid surface 3a of the filling liquid 3 is not equal to or shorter than the first predetermined distance d1, the process proceeds to step S2.

Next, the filling condition generation device 1 causes the nozzle 6 to start moving (step S3).

At this time, the control device 22 starts moving the nozzle 6 toward the opening 2b of the container 2 (see FIG. 8(D)).

When the nozzle 6 moves toward the opening 2b of the container 2, the process proceeds to step S4.

Next, in the filling condition generation device 1, the control device 22 determines whether a stop condition is satisfied (step S4).

The stop condition is a condition for stopping the ejection of the filling liquid 3 from the nozzle 6.

When the control device 22 determines that the stop condition is satisfied, the process proceeds to step S5.

When the control device 22 determines that the stop condition is not satisfied, the process proceeds to step S6.

Next, in the filling condition generation device 1, the control device 22 stops the ejection of the filling liquid 3 of the nozzle 6, and generates a filling condition (step S5).

In this process, the control device 22 stops the ejection of the filling liquid 3 of the nozzle 6 (see FIG. 8(F)), and generates the filling condition based on the ejection amount of the filling liquid 3 from the nozzle 6 corresponding to the position of the tip end portion of the nozzle 6.

When the control device 22 stops the ejection of the filling liquid 3 of the nozzle 6 and generates the filling condition, process K2 is terminated.

Next, in the filling condition generation device 1, the control device 22 determines whether the nozzle 6 has moved by the second predetermined distance d2 (step S6).

When the control device 22 determines that the nozzle 6 has moved by the second predetermined distance d2, the process proceeds to step S7.

When the control device 22 determines that the nozzle 6 has not moved by the second predetermined distance d2, the process proceeds to step S4.

Next, the filling condition generation device 1 causes the nozzle 6 to stop moving (step S7).

In this process, the control device 22 stops the nozzle 6 that has moved by the second predetermined distance d2 (see FIG. 8(E)).

When the movement of the nozzle 6 stops, the process proceeds to step S2.

Now, how the ejection amount of the filling liquid 3 from the nozzle 6 corresponding to the position of the tip end portion of the nozzle 6 is stored will be described.

The position of the tip end portion of the nozzle 6 is indicated by the distance from the bottom surface 2a of the container 2 to the tip end portion of the nozzle 6. The ejection amount of the filling liquid 3 from the nozzle 6 includes: the ejection amount of the filling liquid 3 from the nozzle 6 in each step S3; and the ejection amount of the filling liquid 3 from the nozzle 6 in a period from steps S3 immediately before the stop condition is satisfied in step S4 to step S5.

The ejection amount of the filling liquid 3 from the nozzle 6, corresponding to the position of the tip end portion of the nozzle 6, in each step S3 is stored in step S3. Furthermore, the ejection amount of the filling liquid 3 from the nozzle 6 in a period from steps S3 immediately before the stop condition is satisfied in step S4 to step S5, corresponding to the position of the tip end portion of the nozzle 6, is stored in step S5.

For example, in process K1, when the nozzle 6 moves to a position where the distance from the bottom surface 2a of the container 2 to the tip end portion of the nozzle 6 is 10 mm, and the ejection amount of the filling liquid 3 from the nozzle 6 in step S1 to step S3 is 20 ml, the control device 22 stores 10 mm as the position of the tip end portion of the nozzle 6 and stores 20 ml as the ejection amount of the filling liquid 3 from the nozzle 6. Then, when the nozzle 6 moves by a distance 10 mm and the nozzle 6 ejects the filling liquid 3 in an amount of 20 ml before step S3 is performed for the next time, the control device 22 stores 20 mm as the position of the tip end portion of the nozzle 6 and 20 ml as the ejection amount of the filling liquid 3 from the nozzle 6. The ejection amount of the filling liquid 3 from the nozzle 6 corresponding to the position of the tip end portion of the nozzle 6 is stored to be accumulated to be stored in an added manner instead of overwritten manner.

Now it is assumed that the position of the tip end portion of the nozzle 6 is 90 mm at the time of step S3 immediately before the stop condition is satisfied in step S4. In this case, when the nozzle 6 moves by a distance 10 mm and the nozzle 6 ejects the filling liquid 3 in an amount of 10 ml from step S3 immediately before the stop condition is satisfied in step S4 to step S5, the control device 22 stores 100 mm as the position of the tip end portion of the nozzle 6 and stores 10 ml as the ejection amount of the filling liquid 3 from the nozzle 6.

The control device 22 generates the filling condition based on the ejection amount of the filling liquid 3 from the nozzle 6 corresponding to the position of the tip end portion of the nozzle 6 stored in step S3 and step S5.

Now, a filling condition generated will be described in detail.

An example is described where the filling condition is assumed to be generated under a condition that the ejection amount of the filling liquid 3 from the nozzle 6 is 20 ml in all of the cases where the distance from the bottom surface 2a of the container 2 to the tip end portion of the nozzle 6 is 10 mm, 20 mm, 30 mm, 40 mm, 50 mm, 60 mm, 70 mm, 80 mm, and 90 mm. It is assumed that the ejection amount of the filling liquid 3 from the nozzle 6 is 10 ml in a case of the distance from the bottom surface 2a of the container 2 to the tip end portion of the nozzle 6 is 100 mm.

The filling device is assumed to be capable of changing the ejection amount of the filling liquid 3 from the nozzle of the filling device per unit time based on the opening degree of the valve of the filling device. The ejection amount of the filling liquid 3 from the nozzle of the filling device per unit time is assumed to be 100%, when the opening degree of the valve of the filling device is 100%. In this case, the filling condition is set in such a manner that the ejection amount of the filling liquid 3 from the nozzle of the filling device per unit time is 50% with the opening degree of the valve of the filling device being 50%, in a case of a position at which the distance from the bottom surface 2a of the container 2 to the tip end portion of the nozzle of the filling device is in a range from 0 mm to 10 mm, so that foaming is less likely to occur in the initial state. The filling condition is set in such a manner that the ejection amount of the filling liquid 3 from the nozzle of the filling device per unit time is 100% with the opening degree of the valve of the filling device being 100%, in a case of a position at which the distance from the bottom surface 2a of the container 2 to the tip end portion of the nozzle of the filling device is in a range from 10 mm to 90 mm. The ejection amount of the filling liquid 3 from the nozzle of the filling device per unit time is set to be 5% with the opening degree of the valve of the filling device being 5%, in a case of a position at which the distance from the bottom surface 2a of the container 2 to the tip end portion of the nozzle of the filling device is in a range from 90 mm to 100 mm. Under such filling conditions, the filling device can perform optimum filling that is completed within the shortest possible period and without foaming of the filling liquid 3.

Alternatively, the ejection amount of the filling liquid 3 per unit time may be set so that the filling liquid 3 foams and overflows when the opening degree of the valve of the filling device is 100%. The ejection amount of the filling liquid 3 per unit time varies depending on the diameter of the tip end portion of the nozzle of the filling device and the supply amount of the filling liquid 3 to the nozzle of the filling device. For example, the filling condition is set in such a manner that the ejection amount of the filling liquid 3 from the nozzle of the filling device per unit time is 40% with the opening degree of the valve of the filling device being 40%, in a case of a position at which the distance from the bottom surface 2a of the container 2 to the tip end portion of the nozzle of the filling device is in a range from 0 mm to 10 mm, so that foaming is less likely to occur in the initial state. The filling condition is set in such a manner that the ejection amount of the filling liquid 3 from the nozzle of the filling device per unit time is 80% with the opening degree of the valve of the filling device being 80%, in a case of a position at which the distance from the bottom surface 2a of the container 2 to the tip end portion of the nozzle of the filling device is in a range from 10 mm to 90 mm. The ejection amount of the filling liquid 3 from the nozzle of the filling device per unit time is set to be 4% with the opening degree of the valve of the filling device being 4%, in a case of a position at which the distance from the bottom surface 2a of the container 2 to the tip end portion of the nozzle of the filling device is in a range from 90 mm to 100 mm. The ejection amount of the filling liquid 3 per unit time from in the nozzle of the filling device may vary depending on the likelihood of the filling liquid 3 foaming. Thus, the ejection amount of the filling liquid 3 from the nozzle of the filling device per unit time can be changed according to the diameter of the tip end portion of the nozzle of the filling device and the likelihood of the filling liquid 3 foaming.

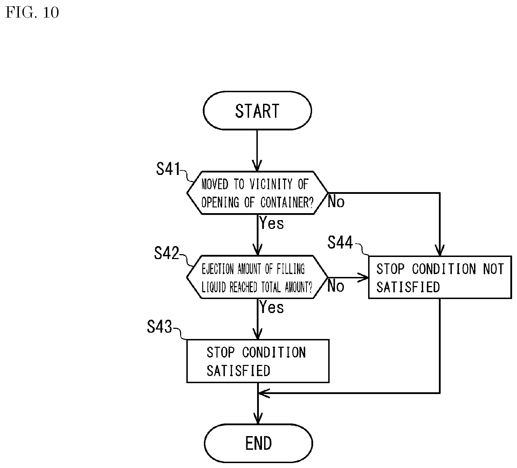

Next, control for determining the stop condition in step S4 will be described in detail with reference to FIG. 10.

Now, the stop condition will be described. The stop condition includes: a condition of whether the tip end portion of the nozzle 6 has reached a stop condition position on the side of the opening 2b of the container 2 (hereinafter, referred to as a "position condition"); and a condition of whether the ejection amount of the filling liquid 3 from the nozzle 6 has reached the total amount (hereinafter, referred to as a "ejection condition"). The control device 22 determines that the stop condition is satisfied when both the position condition and the ejection condition are satisfied.

In the filling condition generation device 1, the control device 22 first determines whether the tip end portion of the nozzle 6 has moved to the vicinity of the opening 2b of the container 2 (step S41).

In this process, the control device 22 determines whether the tip end portion of the nozzle 6 has moved to the stop condition position. The stop condition position is set, for example, at a position separated from the opening 2b of the container 2 by 10 mm toward the bottom surface 2a of the container 2.

When the control device 22 determines that the tip end portion of the nozzle 6 has moved to the vicinity of the opening 2b of the container 2, the process proceeds to step S42.

When the control device 22 determines that the tip end portion of the nozzle 6 has not moved to the vicinity of the opening 2b of the container 2, the process proceeds to step S44.

Next, in the filling condition generation device 1, the control device 22 determines whether the ejection amount of the filling liquid 3 of the nozzle 6 has reached the total amount (step S42).

When the control device 22 determines that the ejection amount of the filling liquid 3 of the nozzle 6 has reached the total amount, the process proceeds to step S43.

When the control device 22 determines that the ejection amount of the filling liquid 3 of the nozzle 6 has not reached the total amount, the process proceeds to step S44.

Next, in the filling condition generation device 1, the control device 22 determines that the stop condition is satisfied (step S43).

When the stop condition is determined to be satisfied, step S4 is terminated.

Next, in the filling condition generation device 1, the control device 22 determines that the stop condition is not satisfied (step S44).

When the stop condition is determined to be not satisfied, step S4 is terminated.

As described above, the control device 22 moves the nozzle 6 from the side of the bottom surface 2a of the container 2 to the side of the opening 2b of the container 2 by means of the driving device 5, while making the filling liquid 3 ejected from the nozzle 6, and generates the filling condition for filling the container 2 with the filling liquid 3 in a state where the tip end portion of the nozzle of the filling device is close to the liquid surface 3a of the filling liquid 3, based on the ejection amount of the filling liquid 3 from the nozzle 6 corresponding to the position of the tip end portion of the nozzle 6.

Thus, with the filling condition generation device 1, ejection of the filling liquid 3 from the nozzle 6 and the movement of the nozzle 6 are implemented appropriately and automatically, whereby the optimum filling condition can be easily generated to be set in the filling device.

As described above, the control device 22 repeats making the nozzle 6 toward the opening 2b of the container 2 by the second predetermined distance d2 when the distance from the tip end portion of the nozzle 6 to the liquid surface 3a of the filling liquid 3 is equal to or shorter than the first predetermined distance d1 and stopping the movement of the nozzle 6 toward the opening 2b of the container 2 after the nozzle 6 has moved toward the opening 2b of the container 2 by the second predetermined distance d2, until the distance from the tip end portion of the nozzle 6 to the liquid surface 3a of the filling liquid 3 decreases to the first predetermined distance d1 or shorter, while making the filling liquid 3 ejected from the nozzle 6, and generates the filling condition for filling the container 2 with the filling liquid 3 in a state where the tip end portion of the nozzle of the filling device is close to the liquid surface 3a of the filling liquid 3, based on the ejection amount of the filling liquid 3 from the nozzle 6 corresponding to the position of the tip end portion of the nozzle 6.

Thus, with the filling condition generation device 1, the filling liquid 3 is ejected from the nozzle 6 in a state where the tip end portion of the nozzle 6 is close to the liquid surface 3a of the filling liquid 3 or being immersed in the filling liquid 3, whereby the ejection amount of the filling liquid 3 from the nozzle 6 corresponding to the position of the tip end portion of the nozzle 6 can be detected and calculated under a condition where the filling liquid 3 is less likely to foam. Thus, with the filling condition generation device 1, the most suitable filling condition can be generated.

As described above, the filling condition generation method includes: process K1 in which the control device 22 makes the tip end portion of the nozzle 6 move to the vicinity of the bottom surface 2a of the container 2; process K2 in which the control device 22 moves the nozzle 6 from the side of the bottom surface 2a of the container 2 to the side of the opening 2b of the container 2 by means of the driving device 5, while making the filling liquid 3 ejected from the nozzle 6, and generates the filling condition for filling the container 2 with the filling liquid 3 in a state where the tip end portion of the nozzle of the filling device is close to the liquid surface 3a of the filling liquid 3, based on the ejection amount of the filling liquid 3 from the nozzle 6 corresponding to the position of the tip end portion of the nozzle 6; and process K3 in which the control device 22 stops the nozzle 6 at the standby position.

Thus, with the filling condition generation method, ejection of the filling liquid 3 from the nozzle 6 and the movement of the nozzle 6 are implemented appropriately and automatically, whereby the optimum filling condition can be easily generated to be set in the filling device.

The stop condition may be determined by other types of control. The other types of control include control in which the stop condition is satisfied when either the position condition or the ejection condition is satisfied, control in which the stop condition is satisfied when the position condition is satisfied, and control in which the stop condition is satisfied when the ejection condition is satisfied.

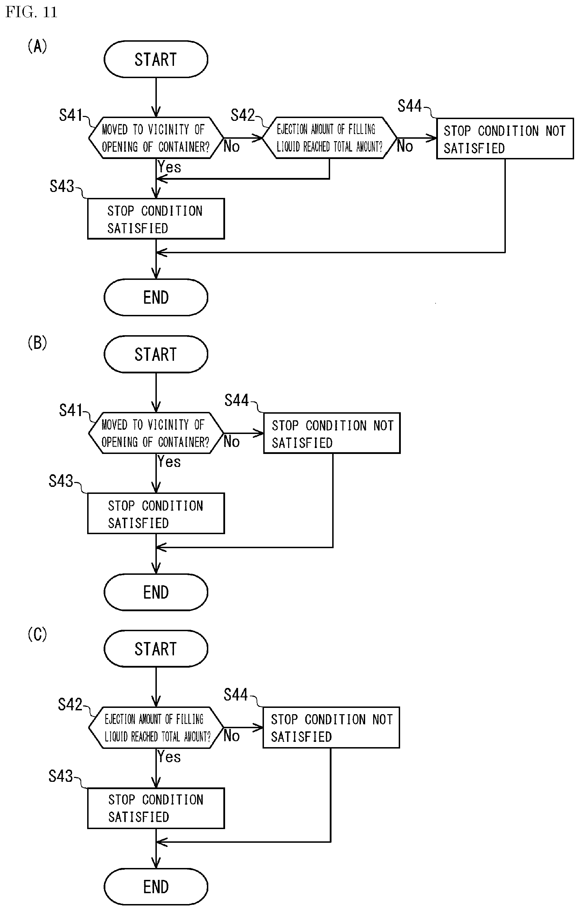

The control in which the stop condition is satisfied when either the position condition or the ejection condition is satisfied will be described with reference to FIG. 11 (A).

In the filling condition generation device 1, the control device 22 first determines whether the tip end portion of the nozzle 6 has moved to the vicinity of the opening 2b of the container 2 (step S41).

In this process, the control device 22 determines whether the tip end portion of the nozzle 6 has moved to the stop condition position.

When the control device 22 determines that the tip end portion of the nozzle 6 has moved to the vicinity of the opening 2b of the container 2, the process proceeds to step S43.

When the control device 22 determines that the tip end portion of the nozzle 6 has not moved to the vicinity of the opening 2b of the container 2, the process proceeds to step S42.

Next, in the filling condition generation device 1, the control device 22 determines that the stop condition is satisfied (step S43).

When the stop condition is determined to be satisfied, step S4 is terminated.

Next, in the filling condition generation device 1, the control device 22 determines whether the ejection amount of the filling liquid 3 of the nozzle 6 has reached the total amount (step S42).

When the control device 22 determines that the ejection amount of the filling liquid 3 of the nozzle 6 has reached the total amount, the process proceeds to step S43.

When the control device 22 determines that the ejection amount of the filling liquid 3 of the nozzle 6 has not reached the total amount, the process proceeds to step S44.

Next, in the filling condition generation device 1, the control device 22 determines that the stop condition is not satisfied (step S44).

When the stop condition is determined to be not satisfied, step S4 is terminated.

As described above, the control device 22 determines that the stop condition is satisfied when either the position condition or the ejection condition is satisfied.

Therefore, when the filling condition generation device 1, even if the stop condition position, on which the position condition is based, is too close to the opening 2b of the container 2, or the total amount, on which the ejection condition is based, is too large, the filling condition can be generated without the filling liquid 3 overflowing from the container 2, as long as one of the position condition and the ejection condition is appropriately set.

Next, control in which the stop condition is satisfied when the position condition is satisfied will be described with reference to FIG. 11(B).

Then, in the filling condition generation device 1, the control device 22 first determines whether the tip end portion of the nozzle 6 has moved to the vicinity of the opening 2b of the container 2 (step S41).

In this process, the control device 22 determines whether the tip end portion of the nozzle 6 has moved to the stop condition position.

When the control device 22 determines that the tip end portion of the nozzle 6 has moved to the vicinity of the opening 2b of the container 2, the process proceeds to step S43.

When the control device 22 determines that the tip end portion of the nozzle 6 has not moved to the vicinity of the opening 2b of the container 2, the process proceeds to step S44.

Next, in the filling condition generation device 1, the control device 22 determines that the stop condition is satisfied (step S43).

When the stop condition is determined to be satisfied, step S4 is terminated.

Next, in the filling condition generation device 1, the control device 22 determines that the stop condition is not satisfied (step S44).

When the stop condition is determined to be not satisfied, step S4 is terminated.

As described above, the control device 22 determines that the stop condition is satisfied when the position condition is satisfied.

Therefore, with the filling condition generation device 1, the filling condition can be generated with the ejection from the nozzle 6 stopped when the tip end portion of the nozzle 6 reaches the stop condition position.

Next, control in which the stop condition is satisfied when the ejection condition is satisfied will be described with reference to FIG. 11(C).

First of all, in the filling condition generation device 1, the control device 22 determines whether the ejection amount of the filling liquid 3 of the nozzle 6 has reached the total amount (step S42).

When the control device 22 determines that the ejection amount of the filling liquid 3 of the nozzle 6 has reached the total amount, the process proceeds to step S43.

When the control device 22 determines that the ejection amount of the filling liquid 3 of the nozzle 6 has not reached the total amount, the process proceeds to step S44.

Next, in the filling condition generation device 1, the control device 22 determines that the stop condition is satisfied (step S43).

When the stop condition is determined to be satisfied, step S4 is terminated.

Next, in the filling condition generation device 1, the control device 22 determines that the stop condition is not satisfied (step S44).

When the stop condition is determined to be not satisfied, step S4 is terminated.

As described above, the control device 22 determines that the stop condition is satisfied when the ejection condition is satisfied.

Therefore, with the filling condition generation device 1, the filling condition can be generated with the ejection from the nozzle 6 stopped when the ejection amount from the nozzle 6 reaches the total amount.

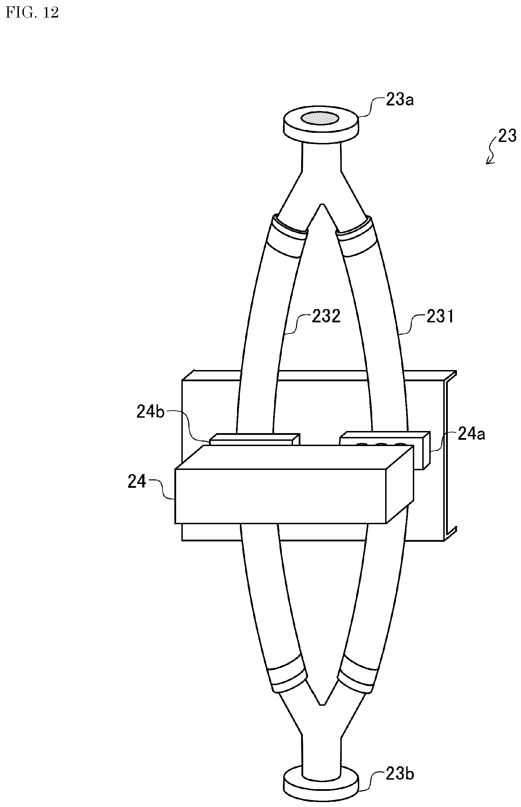

Next, how the ejection amount of the filling liquid 3 from the nozzle 6 of the filling condition generation device 1 per unit time is changed will be described with reference to FIG. 12.

The container 2 has a small cross-sectional area (is thin) in the vicinity of the opening 2b of the container 2 (see FIG. 8). Thus, when the liquid surface 3a of the filling liquid 3 approaches the vicinity of the opening 2b of the container 2, the speed of rising of the liquid surface 3a of the filling liquid 3 might sharply increase, resulting in overflowing of the filling liquid 3. Therefore, when the liquid surface 3a of the filling liquid 3 is approaching the vicinity of the opening 2b of the container 2, the filling condition generation device 1 may reduce the ejection amount of the filling liquid 3 from the nozzle 6 per unit time. Specifically, the filling condition generation device 1 reduces the ejection amount of the filling liquid 3 from the nozzle 6 per unit time when the tip end portion of the nozzle 6 that moves to the opening 2b side of the container 2 is in a predetermined region. The predetermined region is set to be between the stop condition position on the side of the bottom surface 2a of the container 2 and a position separated from the stop condition position by a predetermined distance (for example, 20 mm) for example. This predetermined distance can be set as appropriate by the operator.

As illustrated in FIG. 12, an air cylinder 23 of the filling condition generation device 1 is a device for reducing the ejection amount of the filling liquid 3 from the nozzle 6 per unit time. The air cylinder 23 is provided with cylinders 231 and 232 through which the filling liquid 3 flows, between one opening 23a and the other opening 23b of the air cylinder 23. The flow of the filling liquid 3 through the one cylinder 231 is hindered with the flow path for the filling liquid 3 pressurized by a pressurizing unit 24a of a pressurizing device 24 to be narrow. The other cylinder 232 is not pressurized by the pressurizing unit 24b of the pressurizing device 24, and thus the flow of the filling liquid 3 therethrough is not regulated.

When the ejection amount of the filling liquid 3 from the nozzle 6 per unit time is reduced, in the air cylinder 23, the other cylinder 232 is pressurized by the pressurizing device 24 and thus the flow of the filling liquid 3 through the other cylinder 232 is blocked. In this process, the filling liquid 3 is flows only through the one cylinder 231 of the air cylinder 23, whereby the ejection amount of the filling liquid 3 from the nozzle 6 per unit time can be reduced. The air cylinder 23 is arranged on the flow path of the filling liquid 3.

In addition, a ball valve (not illustrated) and a diaphragm valve (not illustrated) may be arranged on the flow path of the filling liquid 3, and thus the ejection amount of the filling liquid 3 from the nozzle 6 per unit time may be reduced based on the opening degree of these valves. With the filling valve 11, the air cylinder 23, the ball valve, and the diaphragm valve, the ejection amount of the filling liquid 3 from the nozzle 6 per unit time can be changed swiftly compared with a case where the ejection amount of the filling liquid 3 from the nozzle 6 per unit time is changed by means of the setting of the air pressure in the tank 13.

As described above, the control device 22 reduces the ejection amount of the filling liquid 3 from the nozzle 6 per unit time when the tip end portion of the nozzle 6 that moves to the opening 2b side of the container 2 is within a predetermined region.

Therefore, with the filling condition generation device 1, the filling liquid 3 can be prevented from overflowing from the container 2 when the filling condition is generated.

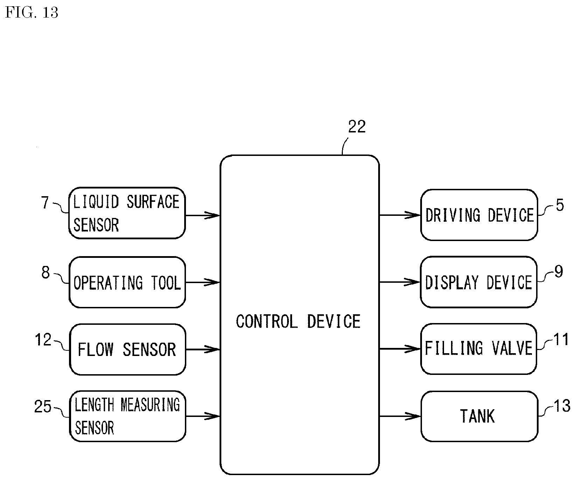

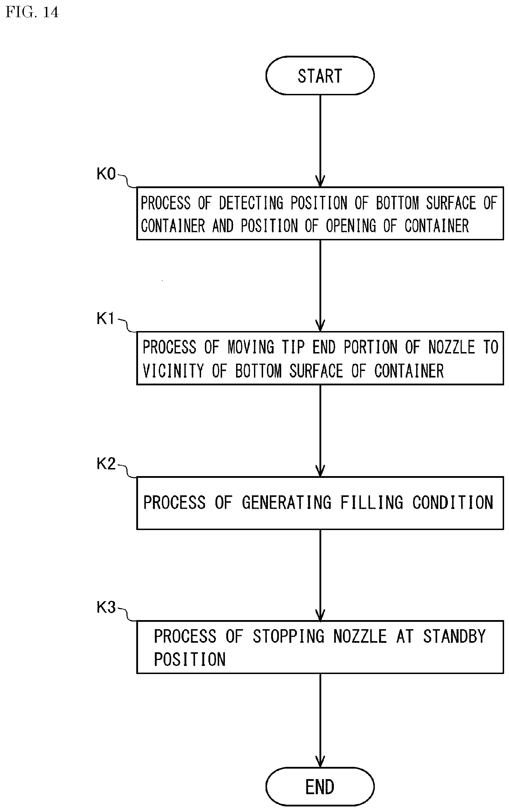

Next, a filling condition generation device 1 according to the second embodiment will be described with reference to FIGS. 13 and 14. In the following, parts that different from the filling condition generation device 1 according to the first embodiment will be mainly described.

As illustrated in FIG. 13, a length measuring sensor 25 of the filling condition generation device 1 is a shape sensor capable of detecting the shape of the container 2. The length measuring sensor 25 converts a change in the amount of light as a result of a laser beam emitted from the length measuring sensor 25 being blocked by the container 2, into an electric signal, and detects the shape of the container 2 including information on the position of the bottom surface 2a of the container 2 and the position of the opening 2b of the container 2.

As illustrated in FIG. 14, a filling condition generation method includes process K0 for detecting the position of the bottom surface 2a of the container 2 and the position of the opening 2b of the container 2, process K1 for moving the tip end portion of the nozzle 6 to the vicinity of the bottom surface 2a of the container 2, process K2 for generating the filling condition, and process K3 for stopping the nozzle 6 at a standby position.

In the filling condition generation device 1, first or all, the position of the bottom surface 2a of the container 2 and the position of the opening 2b of the container 2 are detected (process K0).

In this process, the control device 22 acquires information on the shape of the container 2 including information on the position of the bottom surface 2a of the container 2 and the position of the opening 2b of the container 2, by means of the length measuring sensor 25. Then, the control device 22 sets the start position to be the position separated from the position of the bottom surface 2a of the container 2 by a predetermined distance (10 mm for example) toward the opening 2b of the container 2. Then, the control device 22 sets the stop condition position to be the position separated from the position of the opening 2b of the container 2 by a predetermined distance (20 mm for example) toward the bottom surface 2a of the container 2.

When the position of the bottom surface 2a of the container 2 and the position of the opening 2b of the container 2 are detected, the process proceeds to process K1.

As described above, upon moving the tip end portion of the nozzle 6 to the vicinity of the bottom surface 2a of the container 2 based on the bottom surface 2a of the container 2 detected by the length measuring sensor 25, the control device 22 makes the nozzle 6 start ejecting the filling liquid 3, and makes the nozzle 6 stop ejecting the filling liquid 3 when the tip end portion of the nozzle 6 moving toward the opening 2b of the container 2 moves to the vicinity of the opening 2b of the container 2 based on the position of the opening 2b of the container 2 detected by the length measuring sensor 25.

Therefore, with the filling condition generation device 1, the operator needs not to set the start position and the stop condition position, whereby the optimum filling condition to be set in the filling device can be generated more easily. Furthermore, the filling liquid 3 can be prevented from overflowing from the container 2 by reducing the ejection amount of the filling liquid 3 from the nozzle 6 per unit time with the predetermined area set based on the automatically set stop condition position.

Next, a filling device including the filling condition generation device 1 will be described.

The filling device including the filling condition generation device 1 includes a transport conveyor for moving the container 2, a loading device for loading the container 2 onto the transport conveyor, a tank for storing the filling liquid 3, a pump causing the filling liquid 3 to flow to the nozzle, a plurality of the nozzles for ejecting the filling liquid 3 to the container 2, and a pipe for connecting the tank, the pump, and the nozzles to each other. The filling device is a small filling device. The filling device can load the container 2 onto the transport conveyor at a constant interval by means of the loading device. The filling device can automatically fill dozens of containers 2 with the filling liquid 3 per minute.

When the filling liquid 3 is filled based on the filling conditions, the filling device moves the nozzle of the filling device toward the opening 2b of the container 2 while maintaining a state where the tip end portion of the nozzle of the filling device is close the liquid surface 3a of the filling liquid 3, whereby the filling liquid 3 can be prevented from foaming. Furthermore, when the nozzle of the filling device moves from the bottom surface 2a of the container 2 based on the filling condition, the nozzle of the filling device continuously rises without stopping in the middle. When the filling liquid 3 is filled based on the filling conditions, the filling device fills the filling liquid 3 with an ejection amount of the filling liquid 3 from the nozzle of the filling device per unit time which enables quicker filling than a case of an ejection amount of the filling liquid 3 from the nozzle 6 per unit time at the time when the filling condition generation device 1 generates the filling condition, and enables the filling performance of the filling device to be sufficiently exerted. When the filling device fills the filling liquid 3 based on the filling condition, the distance from the tip end portion of the nozzle of the filling device to the liquid surface 3a of the filling liquid 3 can be changed as appropriate. For example, when filling the filling liquid 3 having a high viscosity, the filling device fills the filling liquid 3 with the distance from the tip end portion of the nozzle of the filling device to the liquid surface 3a of the filling liquid 3 set to be long.

As described above, the filling device includes the filling condition generation device 1, and based on the filling condition, consecutively fills a plurality of containers 2 with the filling liquid 3, in a state where the tip end portion of the nozzle of the filling device is close to the liquid surface 3a of the filling liquid 3.

Thus, with the filling device including the filling condition generation device 1, the filling liquid 3 is filled based on the filling condition, and thus the filling liquid 3 can be prevented from foaming when the filling liquid 3 is filled, and the filling liquid 3 can be filled with the ejection amount of the filling liquid 3 from the nozzle of the filling device per unit time enabling the filling performance of the filling device to be sufficiently exerted.

### REFERENCE SIGNS LIST

1 filling condition generation device
2 container
2a bottom surface
2b opening
3 filling liquid
3a liquid surface
5 driving device
6 nozzle
7 liquid surface sensor
25 side length sensor
d1 first predetermined distance
d2 second predetermined distance
K1 process of moving tip end portion of nozzle to vicinity of bottom surface of container
K2 process of generating filling condition
K3 process of stopping nozzle at standby position

## Claims

1. A filling device comprising a filling condition generation device (1) configured to generate a filling condition for the filling device to consecutively fill a plurality of containers (2) with filling liquid (3), the filling condition generation device (1) comprising:
a generation device side nozzle (6) configured to eject filling liquid (3) into a container (2);
a driving device (5) configured to move the generation device side nozzle (6); and
a control device (22), wherein
the control device (22) is configured to
move the generation device side nozzle (6) from a side of a bottom surface (2a) of the container (2) to a side of an opening (2b) of the container (2) by means of the driving device (5), while making the generation device side nozzle (6) to eject the filling liquid (3), and
generate the filling condition for filling the container (2) with the filling liquid (3) in a state where a tip end portion of a filling device side nozzle of the filling device is close to a liquid surface (3a) of the filling liquid (3), based on an ejection amount of the filling liquid (3) from the generation device side nozzle (6) corresponding to a position of the generation device side nozzle (6),
the filling condition generation device (1) further comprises a liquid surface sensor (7) configured to detect whether a distance from a tip end portion of the generation device side nozzle (6) to the liquid surface (3a) of the filling liquid (3) is equal to or shorter than a first predetermined distance, and wherein
the control device (22) is configured to
repeat, while making the generation device side nozzle (6) eject the filling liquid (3), making the generation device side nozzle (6) move toward the opening (2b) of the container (2) by a second predetermined distance when the distance from the tip end portion of the generation device side nozzle (6) to the liquid surface (3a) of the filling liquid (3) is equal to or shorter than the first predetermined distance, and after making the generation device side nozzle (6) move toward the opening (2b) of the container (2) by the second predetermined distance, making the generation device side nozzle (6) stop moving toward the opening (2b) of the container (2) until the distance from the tip end portion of the generation device side nozzle (6) to the liquid surface (3a) of the filling liquid (3) becomes equal to or shorter than the first predetermined distance, and
generates the filling condition for filling the container (2) with the filling liquid (3) in the state where the tip end portion of the filling device side nozzle (6) is close to the liquid surface (3a) of the filling liquid (3), based on the ejection amount of the filling liquid (3) from the generation device side nozzle (6) corresponding to the position of the generation device side nozzle (6),
**characterized in that**:
the filling condition generation device (1) further comprises a shape sensor configured to detect a position of the bottom surface (2a) of the container (2) and a position of the opening (2b) of the container (2), wherein
the control device (22) is configured to
make the generation device side nozzle (6) start ejecting the filling liquid (3), when the tip end portion of the generation device side nozzle (6) has moved to a vicinity of the bottom surface (2a) of the container (2), based on the position of the bottom surface (2a) of the container (2) detected by the shape sensor, and
make the generation device side nozzle (6) stop ejecting the filling liquid (3), when the tip end portion of the generation device side nozzle (6) moving toward the opening (2b) of the container (2) has moved to the vicinity of the opening (2b) of the container (2), based on the position of the opening (2b) of the container (2) detected by the shape sensor.

2. The filling condition generation device according to claim 1, wherein when the tip end portion of the generation device side nozzle (6) moving toward the opening (2b) of the container (2) is within a predetermined region, the control device (22) is configured to reduce an ejection amount of the filling liquid (3) from the generation device side nozzle (6) per unit time.

3. A filling condition generation method performed by a filling condition generation device to generate a filling condition that is a condition for a filling device to consecutively fill a plurality of containers with filling liquid, the filling condition generation device including a generation device side nozzle that is a nozzle configured to eject filling liquid into a container, a driving device configured to move the generation device side nozzle, a control device, and a liquid surface sensor configured to detect whether a distance from a tip end portion of the generation device side nozzle to the liquid surface of the filling liquid is equal to or shorter than a first predetermined distance, the method comprising:
a process of making, by the control device, the generation device side nozzle move from side of a bottom surface of the container to side of an opening of the container by means of the driving device while making the generation device side nozzle eject the filling liquid, and generating the filling condition for filling the container with the filling liquid in a state where a tip end portion of a filling device side nozzle that is a nozzle of the filling device is close to a liquid surface of the filling liquid, based on an ejection amount of the filling liquid from the generation device side nozzle corresponding to a position of the generation device side nozzle, wherein
a process of the generating the filling condition includes:
repeating, by the control device while making the generation device side nozzle eject the filling liquid, making the generation device side nozzle move toward the opening of the container by a second predetermined distance when the distance from the tip end portion of the generation device side nozzle to the liquid surface of the filling liquid is equal to or shorter than the first predetermined distance, and after making the generation device side nozzle move toward the opening of the container by the second predetermined distance, making the generation device side nozzle stop moving toward the opening of the container until the distance from the tip end portion of the generation device side nozzle to the liquid surface of the filling liquid becomes equal to or shorter than the first predetermined distance; and
generating the filling condition for filling the container with the filling liquid in the state where the tip end portion of the filling device side nozzle is close to the liquid surface of the filling liquid, based on the ejection amount of the filling liquid from the generation device side nozzle corresponding to the position of the generation device side nozzle.

## Patentansprüche

1. Füllvorrichtung, die eine Vorrichtung zur Erzeugung eines Füllzustands (1) umfasst, die ausgelegt ist zum Erzeugen eines Füllzustands für die Füllvorrichtung, um nacheinander mehrere Behälter (2) mit Füllflüssigkeit (3) zu füllen, wobei die Vorrichtung zur Erzeugung eines Füllzustands (1) Folgendes umfasst:
eine Düse (6) auf der Seite der Erzeugungsvorrichtung, die ausgelegt ist zum Ausstoßen von Füllflüssigkeit (3) in einen Behälter (2);
eine Antriebsvorrichtung (5), die ausgelegt ist zum Bewegen der Düse (6) auf der Seite der Erzeugungsvorrichtung; und
eine Steuervorrichtung (22), wobei
die Steuervorrichtung (22) ausgelegt ist zum Bewegen der Düse (6) auf der Seite der Erzeugungsvorrichtung mittels der Antriebsvorrichtung (5) von einer Seite einer Bodenfläche (2a) des Behälters (2) zu einer Seite einer Öffnung (2b) des Behälters (2), während die Düse (6) auf der Seite der Erzeugungsvorrichtung veranlasst wird, die Füllflüssigkeit (3) auszustoßen, und Erzeugen des Füllzustands zum Füllen des Behälters (2) mit der Füllflüssigkeit (3) in einem Zustand, in dem sich ein Spitzenendabschnitt einer Düse der Füllvorrichtung auf der Seite der Füllvorrichtung nahe einer Flüssigkeitsoberfläche (3a) der Füllflüssigkeit (3) befindet, basierend auf einer Ausstoßmenge der Füllflüssigkeit (3) aus der Düse (6) auf der Seite der Erzeugungsvorrichtung, die einer Position der Düse (6) auf der Seite der Erzeugungsvorrichtung entspricht,
wobei die Vorrichtung zur Erzeugung eines Füllzustands (1) ferner einen Flüssigkeitsoberflächensensor (7) umfasst, der ausgelegt ist zum Detektieren, ob ein Abstand von einem Spitzenendabschnitt der Düse (6) auf der Seite der Erzeugungsvorrichtung zu der Flüssigkeitsoberfläche (3a) der Füllflüssigkeit (3) gleich oder kürzer als ein erster vorbestimmter Abstand ist, und wobei
die Steuervorrichtung (22) ausgelegt ist zum wiederholten, während die Düse (6) auf der Seite der Erzeugungsvorrichtung veranlasst wird, die Füllflüssigkeit (3) auszustoßen, Veranlassen der Düse (6) auf der Seite der Erzeugungsvorrichtung, sich um einen zweiten vorbestimmten Abstand in Richtung der Öffnung (2b) des Behälters (2) zu bewegen, wenn der Abstand vom Spitzenendabschnitt der Düse (6) auf der Seite der Erzeugungsvorrichtung zur Flüssigkeitsoberfläche (3a) der Füllflüssigkeit (3) gleich oder kürzer als der erste vorbestimmte Abstand ist; und, nachdem die Düse (6) auf der Seite der Erzeugungsvorrichtung um den zweiten vorbestimmten Abstand zur Öffnung (2b) des Behälters (2) bewegt wurde, Veranlassen der Düse (6) auf der Seite der Erzeugungsvorrichtung, die Bewegung in Richtung der Öffnung (2b) des Behälters (2) zu unterbrechen, bis der Abstand vom Spitzenendabschnitt der Düse (6) auf der Seite der Erzeugungsvorrichtung zur Flüssigkeitsoberfläche (3a) der Füllflüssigkeit (3) gleich oder kürzer als der erste vorbestimmte Abstand wird, und
Erzeugen des Füllzustands zum Füllen des Behälters (2) mit der Füllflüssigkeit (3) in dem Zustand, in dem sich der Spitzenendabschnitt der Düse (6) auf der Seite der Füllvorrichtung nahe der Flüssigkeitsoberfläche (3a) der Füllflüssigkeit (3) befindet, basierend auf der Ausstoßmenge der Füllflüssigkeit (3) aus der Düse (6) auf der Seite der Erzeugungsvorrichtung, die der Position der Düse (6) auf der Seite der Erzeugungsvorrichtung entspricht,
**dadurch gekennzeichnet, dass:**
die Vorrichtung zur Erzeugung eines Füllzustands (1) ferner einen Formsensor umfasst, der dazu ausgelegt ist, eine Position der Bodenfläche (2a) des Behälters (2) und eine Position der Öffnung (2b) des Behälters (2) zu detektieren, wobei
die Steuervorrichtung (22) ausgelegt ist zum Veranlassen der Düse (6) auf der Seite der Erzeugungsvorrichtung, mit dem Ausstoßen der Füllflüssigkeit (3) zu beginnen, wenn sich der Spitzenendabschnitt der Düse (6) auf der Seite der Erzeugungsvorrichtung in eine Nähe der Bodenfläche (2a) des Behälters (2) bewegt hat, basierend auf der Position der Bodenfläche (2a) des Behälters (2), die durch den Formsensor detektiert wird, und Veranlassen der Düse (6) auf der Seite der Erzeugungsvorrichtung, das Ausstoßen der Füllflüssigkeit (3) zu stoppen, wenn sich der Spitzenendabschnitt der Düse (6) auf der Seite der Erzeugungsvorrichtung, die sich in Richtung der Öffnung (2b) des Behälters (2) bewegt, in die Nähe der Öffnung (2b) des Behälters (2) bewegt hat, basierend auf der Position der Öffnung (2b) des Behälters (2), die durch den Formsensor detektiert wird.

2. Vorrichtung zur Erzeugung eines Füllzustands nach Anspruch 1, wobei, wenn sich der Spitzenendabschnitt der Düse (6) auf der Seite der Erzeugungsvorrichtung, die sich in Richtung der Öffnung (2b) des Behälters (2) bewegt, innerhalb eines vorbestimmten Bereichs befindet, die Steuervorrichtung (22) dazu ausgelegt ist, eine Ausstoßmenge der Füllflüssigkeit (3) aus der Düse (6) auf der Seite der Erzeugungsvorrichtung pro Zeiteinheit zu reduzieren.

3. Verfahren zur Erzeugung eines Füllzustands, das durch eine Vorrichtung zur Erzeugung eines Füllzustands durchgeführt wird, um einen Füllzustand zu erzeugen, der ein Zustand für eine Füllvorrichtung ist, um mehrere Behälter nacheinander mit Füllflüssigkeit zu füllen, wobei die Vorrichtung zur Erzeugung eines Füllzustands eine Düse auf der Seite der Erzeugungsvorrichtung, die eine Düse ist, die dazu ausgelegt ist, Füllflüssigkeit in einen Behälter auszustoßen, eine Antriebsvorrichtung, die dazu ausgelegt ist, die Düse auf der Seite der Erzeugungsvorrichtung zu bewegen, eine Steuervorrichtung, und einen Flüssigkeitsoberflächensensor, der dazu ausgelegt ist, zu detektieren, ob ein Abstand von einem Spitzenendabschnitt der Düse auf der Seite der Erzeugungsvorrichtung zu der Flüssigkeitsoberfläche der Füllflüssigkeit gleich oder kürzer als ein erster vorbestimmter Abstand ist, umfasst, wobei das Verfahren Folgendes umfasst:
ein Verfahren zum Veranlassen, durch die Steuereinrichtung, der Düse auf der Seite der Erzeugungsvorrichtung, sich mittels der Antriebseinrichtung von einer Seite einer Bodenfläche des Behälters zu einer Seite einer Öffnung des Behälters zu bewegen, dabei die Düse auf der Seite der Erzeugungsvorrichtung veranlassend, die Füllflüssigkeit auszustoßen, und Erzeugen des Füllzustands zum Füllen des Behälters mit der Füllflüssigkeit in einem Zustand, in dem ein Spitzenendabschnitt einer Düse auf der Seite der Füllvorrichtung, die eine Düse der Füllvorrichtung ist, nahe einer Flüssigkeitsoberfläche der Füllflüssigkeit ist, basierend auf einer Ausstoßmenge der Füllflüssigkeit aus der Düse auf der Seite der Erzeugungsvorrichtung, die einer Position der Düse auf der Seite der Erzeugungsvorrichtung entspricht, wobei
ein Prozess des Erzeugens des Füllzustands Folgendes umfasst:
wiederholtes Veranlassen, durch die Steuervorrichtung, während die Düse auf der Seite der Erzeugungsvorrichtung veranlasst wird, die Füllflüssigkeit auszustoßen, der Düse auf der Seite der Erzeugungsvorrichtung, sich um einen zweiten vorbestimmten Abstand in Richtung der Öffnung des Behälters zu bewegen, wenn der Abstand vom Spitzenendabschnitt der Düse auf der Seite der Erzeugungsvorrichtung zur Flüssigkeitsoberfläche der Füllflüssigkeit gleich oder kürzer als der erste vorbestimmte Abstand ist, und, nachdem die Düse auf der Seite der Erzeugungsvorrichtung um den zweiten vorbestimmten Abstand zur Öffnung des Behälters bewegt wurde, Veranlassen der Düse auf der Seite der Erzeugungsvorrichtung, die Bewegung in Richtung der Öffnung des Behälters zu unterbrechen, bis der Abstand vom Spitzenendabschnitt der Düse auf der Seite der Erzeugungsvorrichtung zur Flüssigkeitsoberfläche der Füllflüssigkeit gleich oder kürzer als der erste vorbestimmte Abstand wird, und Erzeugen des Füllzustands zum Füllen des Behälters mit der Füllflüssigkeit in dem Zustand, in dem sich der Spitzenendabschnitt einer Düse auf der Seite der Füllvorrichtung nahe der Flüssigkeitsoberfläche der Füllflüssigkeit befindet, basierend auf der Ausstoßmenge der Füllflüssigkeit aus der Düse auf der Seite der Erzeugungsvorrichtung, die der Position der Düse auf der Seite der Erzeugungsvorrichtung entspricht.

## Revendications

1. Dispositif de remplissage comprenant un dispositif de génération de conditions de remplissage (1) configuré pour générer une condition de remplissage pour que le dispositif de remplissage remplisse consécutivement une pluralité de récipients (2) avec un liquide de remplissage (3), le dispositif de génération de conditions de remplissage (1) comprenant :
une buse (6) côté dispositif de génération configurée pour éjecter du liquide de remplissage (3) dans un récipient (2) ;
un dispositif d'entraînement (5) configuré pour déplacer la buse (6) côté dispositif de génération ; et
un dispositif de commande (22), dans lequel
le dispositif de commande (22) est configuré pour
déplacer la buse (6) côté dispositif de génération d'un côté d'une surface inférieure (2a) du récipient (2) vers un côté d'une ouverture (2b) du récipient (2) au moyen du dispositif d'entraînement (5), tout en amenant la buse (6) côté dispositif de génération à éjecter le liquide de remplissage (3), et
générer la condition de remplissage pour remplir le récipient (2) avec le liquide de remplissage (3) dans un état où une partie d'extrémité de pointe d'une buse (6) côté dispositif de remplissage du dispositif de remplissage est proche d'une surface de liquide (3a) du liquide de remplissage (3), sur la base d'une quantité d'éjection du liquide de remplissage (3) à partir de la buse (6) côté dispositif de génération correspondant à une position de la buse (6) côté dispositif de génération,
le dispositif de génération de conditions de remplissage (1) comprend en outre un capteur de surface de liquide (7) configuré pour détecter si une distance entre une partie d'extrémité de pointe de la buse (6) côté dispositif de génération et la surface de liquide (3a) du liquide de remplissage (3) est inférieure ou égale à une première distance prédéterminée, et dans lequel
le dispositif de commande (22) est configuré pour
répéter, tout en amenant la buse (6) côté dispositif de génération à éjecter le liquide de remplissage (3), l'action d'amener la buse (6) côté dispositif de génération à se déplacer vers l'ouverture (2b) du récipient (2) d'une seconde distance prédéterminée lorsque la distance entre la partie d'extrémité de pointe de la buse (6) côté dispositif de génération et la surface de liquide (3a) du liquide de remplissage (3) est inférieure ou égale à la première distance prédéterminée, et après avoir amené la buse (6) côté dispositif de génération à se déplacer vers l'ouverture (2b) du récipient (2) de la seconde distance prédéterminée, l'action d'amener la buse (6) côté dispositif de génération à arrêter le déplacement vers l'ouverture (2b) du récipient (2) jusqu'à ce que la distance entre la partie d'extrémité de pointe de la buse (6) côté dispositif de génération et la surface de liquide (3a) du liquide de remplissage (3) devienne inférieure ou égale à la première distance prédéterminée, et
générer la condition de remplissage pour remplir le récipient (2) avec le liquide de remplissage (3) dans l'état où la partie d'extrémité de pointe de la buse (6) côté dispositif de remplissage est proche de la surface de liquide (3a) du liquide de remplissage (3), sur la base de la quantité d'éjection du liquide de remplissage (3) à partir de la buse (6) côté dispositif de génération correspondant à la position de la buse (6) côté dispositif de génération,
**caractérisé en ce que** :
le dispositif de génération de conditions de remplissage (1) comprend en outre un capteur de forme configuré pour détecter une position de la surface inférieure (2a) du récipient (2) et une position de l'ouverture (2b) du récipient (2), dans lequel
le dispositif de commande (22) est configuré pour
amener la buse (6) côté dispositif de génération à commencer l'éjection du liquide de remplissage (3), lorsque la partie d'extrémité de pointe de la buse (6) côté dispositif de génération s'est déplacée à proximité de la surface inférieure (2a) du récipient (2), sur la base de la position de la surface inférieure (2a) du récipient (2) détectée par le capteur de forme, et
amener la buse (6) côté dispositif de génération à arrêter l'éjection du liquide de remplissage (3), lorsque la partie d'extrémité de pointe de la buse (6) côté dispositif de génération se déplaçant vers l'ouverture (2b) du récipient (2) s'est déplacée à proximité de l'ouverture (2b) du récipient (2), sur la base de la position de l'ouverture (2b) du récipient (2) détectée par le capteur de forme.

2. Dispositif de génération de conditions de remplissage selon la revendication 1, dans lequel lorsque la partie d'extrémité de pointe de la buse (6) côté dispositif de génération se déplaçant vers l'ouverture (2b) du récipient (2) se trouve dans une région prédéterminée, le dispositif de commande (22) est configuré pour réduire une quantité d'éjection du liquide de remplissage (3) à partir de la buse (6) côté dispositif de génération par unité de temps.

3. Procédé de génération de conditions de remplissage réalisé par un dispositif de génération de conditions de remplissage pour générer une condition de remplissage qui est une condition pour qu'un dispositif de remplissage remplisse consécutivement une pluralité de récipients avec un liquide de remplissage, le dispositif de génération de conditions de remplissage comprenant une buse côté dispositif de génération qui est une buse configurée pour éjecter du liquide de remplissage dans un récipient, un dispositif d'entraînement configuré pour déplacer la buse côté dispositif de génération, un dispositif de commande et un capteur de surface de liquide configuré pour détecter si une distance entre une partie d'extrémité de pointe de la buse côté dispositif de génération et la surface de liquide du liquide de remplissage est inférieure ou égale à une première distance prédéterminée, le procédé comprenant :
un processus consistant à amener, par le dispositif de commande, la buse côté dispositif de génération à se déplacer d'un côté d'une surface inférieure du récipient à un côté d'une ouverture du récipient au moyen du dispositif d'entraînement tout en amenant la buse côté dispositif de génération à éjecter le liquide de remplissage, et à générer la condition de remplissage pour remplir le récipient avec le liquide de remplissage dans un état où une partie d'extrémité de pointe d'une buse côté dispositif de remplissage qui est une buse du dispositif de remplissage est proche d'une surface de liquide du liquide de remplissage, sur la base d'une quantité d'éjection du liquide de remplissage à partir la buse côté dispositif de génération correspondant à une position de la buse côté dispositif de génération, dans lequel
un processus de génération de la condition de remplissage comprend :
la répétition, par le dispositif de commande tout en amenant la buse côté dispositif de génération à éjecter le liquide de remplissage, de l'action d'amener la buse côté dispositif de génération à se déplacer vers l'ouverture du récipient d'une seconde distance prédéterminée lorsque la distance entre la partie d'extrémité de pointe de la buse côté dispositif de génération et la surface de liquide du liquide de remplissage est inférieure ou égale à la première distance prédéterminée, et après avoir amené la buse côté dispositif de génération à se déplacer vers l'ouverture du récipient d'une seconde distance prédéterminée, de l'action d'amener la buse côté dispositif de génération à arrêter le déplacement vers l'ouverture du récipient jusqu'à ce que la distance entre la partie d'extrémité de pointe de la buse côté dispositif de génération et la surface de liquide du liquide de remplissage devienne inférieure ou égale à la première distance prédéterminée ; et
la génération de la condition de remplissage pour remplir le récipient avec le liquide de remplissage dans l'état où la partie d'extrémité de pointe de la buse côté dispositif de remplissage est proche de la surface de liquide du liquide de remplissage, sur la base de la quantité d'éjection du liquide de remplissage à partir de la buse côté dispositif de génération correspondant à la position de la buse côté dispositif de génération.
